# FASCICULE DE BREVET EUROPEEN

(11) **EP 1 019 975 B1**
(45) Date de publication et mention de la délivrance du brevet: **13.03.2002**
(21) Numéro de dépôt: 98946541.4
(22) Date de dépôt: 01.10.1998
(51) Int. Cl.: H01M 8/22

(54) **GENERATEURS ELECTROCHIMIQUES PRODUISANT DE L'ELECTRICITE PAR OXYDATION D'UN METAL ET REDUCTION D'UN GAZ OXYDANT**
ELEKTROCHEMISCHE GENERATOREN WELCHE DURCH OXYDATION EINES METALLS UND REDUKTION EINES OXYDIERENDEN GASES STROM PRODUZIEREN
ELECTROCHEMICAL GENERATORS PRODUCING ELECTRICITY BY OXIDISING A METAL AND REDUCING AN OXIDISING GAS

(30) Priorité: 02.10.1997 FR 9712271
(43) Date de publication de la demande: 19.07.2000
(73) Titulaire: INSTITUT FRANCAIS DU PETROLE, 92852 Rueil-Malmaison Cedex (FR)
(72) Inventeur: GIRAUD, Claudine, 92300 Levallois Perret (FR); GIRAUD, François, 75015 Paris (FR); GIRAUD, Christophe, 75007 Paris (FR); Tardiff De Moidrey, Sophie, 75007 Paris (FR); Sajot, Nicolas, 75009 Paris (FR)
(86) Numéro de dépôt international: FR9802101
(87) Numéro de publication internationale: WO9918624

(56) Documents cités:
- EP-A- 0 330 290
- EP-A- 0 518 407
- US-A- 4 172 924
- US-A- 5 206 096
- US-A- 5 250 370
- RAYMOND JASINSKI ET AL: "A zinc Paste Primary Battery" JOURNAL OF THE ELECTROCHEMICAL SOCIETY., vol. 130, no. 3, - mars 1983 pages 539-542, XP002068573 MANCHESTER, NEW HAMPSHIRE US
- PATENT ABSTRACTS FROM JAPAN VOL V, NR 1 5 F VRIER 1974 XP002068574 -& JP 48 044293 B (YUASA BATTERY CO) 24 décembre 1973

## Description

La présente invention concerne les générateurs électrochimiques produisant de l'électricité par oxydation d'un métal et réduction d'un gaz oxydant, tel que l'oxygène, en particulier l'oxygène contenu dans l'atmosphère. De tels générateurs électrochimiques peuvent être désignés comme étant du type métal-air.

La présente invention concerne plus particulièrement les générateurs électrochimiques de ce type dans lesquels le métal réactif, qui est consommé à l'anode, est une poudre qui est mélangée avec un électrolyte pour former une pâte, laquelle est amenée à se déplacer en étant en contact, d'une part, avec un collecteur de courant anodique (ou électrode négative dite inerte, c'est-à-dire non consommable), et, d'autre part, avec un diaphragme poreux isolant lui-même en contact électrolytique avec l'électrode positive, à laquelle l'oxygène est consommé.

On sait que les générateurs électrochimiques consommant, à l'électrode négative, un métal réactif tel que notamment le zinc, l'aluminium, le fer, le cadmium, le lithium, le magnésium ou le plomb, et, à l'électrode positive, un gaz oxydant tel que l'oxygène (ou l'air qui le contient), présentent des caractéristiques très attrayantes. En particulier, la densité d'énergie théorique des couples métal-air envisagés pour ces générateurs est élevée : elle est, par exemple, de 1350 Wh/kg de zinc pour le couple zinc-air, et la densité pratique peut en être une fraction élevée. Les matériaux d'électrode et les matières actives de ces générateurs sont, dans les cas les plus intéressants, notamment zinc-air, aluminium-air et fer-air, abondants et bon marché, permettant ainsi des applications de masse.

Cependant, des difficultés apparaissent dans la réalisation pratique de ces générateurs, limitant fortement leurs performances par rapport à celles que la théorie aurait permis d'espérer et restreignant de ce fait les applications industrielles.

On forme par exemple de grands espoirs sur les générateurs zinc-air utilisant des plaques de zinc comme anode. Malheureusement, ce type de batterie ne possède qu'une durée de vie limitée, du fait de la formation de dendrites qui détruisent l'isolement électrique des électrodes au bout de quelques recharges. Ces mêmes dendrites rendent malaisé, sinon impossible, l'échange standard des plaques-électrodes pour procéder à leur reconditionnement en dehors du générateur, opération mécanique lourde et, de toute façon, très peu pratique et coûteuse.

Contre les phénomènes de dendrites provoquant des vieillissements d'électrodes incompatibles avec le bon fonctionnement de ces batteries, on peut envisager de faire circuler l'électrolyte au travers du générateur, pour répartir de façon homogène les réactions sur l'ensemble de la surface des électrodes et pour contrer les développements dendritiques notamment par dissolution des composés formés (demande internationale WO 87/07768 ; brevets américains US-A-4 908 281 et US-A-4 842 963). Il en résulte que le volume d'électrolyte pour dissoudre les produits de réaction est important, ce qui diminue les performances massiques et volumiques des générateurs.

Par ailleurs, la recharge électrique des électrodes métalliques, avec ou sans circulation d'électrolyte, requiert une interruption longue du fonctionnement de ces générateurs.

La technique mettant en oeuvre la circulation d'une suspension de particules de zinc dans la solution électrolytique a été expérimentée pour pallier ce temps de recharge important (brevets américains US-A-4 139 679 et US-A-5 441 820 ; demande internationale WO 96/35830 ; brevet américain US-A-4 126 733). L'anode du générateur étant constituée par cette suspension (et un collecteur métallique), la réalisation du générateur impose que l'on sache faire circuler la suspension à l'intérieur de celui-ci, selon un trajet convenable, la recharge pouvant s'effectuer à l'extérieur dans des installations appropriées. Malheureusement, la mise en oeuvre pratique de ces idées simples et séduisantes s'est avérée beaucoup plus compliquée, surtout du fait que la suspension de particules métalliques résulte d'un équilibre instable. Notamment la recherche d'un foncticnnement stable, imposant un large dimensionnement des sections de passage et une dilution suffisante de la suspension, a fait perdre l'avantage que l'on aurait pu espérer sur la compacité et donc la densité de puissance du générateur.

Le souci de pallier les difficultés rencontrées a conduit à proposer une autre technique, à savoir celle décrite dans le brevet américain US-A-4 172 924, qui concerne un générateur électrochimique comprenant au moins :
- une première électrode dite inerte (non consommable), alimentée par de l'oxygène ou un gaz contenant de l'oxygène et permettant à l'oxygène de s'y réduire électrolytiquement ;
- un diaphragme, simple ou composite, en contact électrolytique avec cette première électrode ; et
- une deuxième électrode inerte (non consommable), séparée du diaphragme par au moins une cavité communiquant par une entrée et une sortie avec l'extérieur du générateur.

Il s'agit de faire transiter à travers la cavité, de façon qu'elle s'y trouve en contact à la fois avec le diaphragme et avec la deuxième électrode inerte, une pâte constituée de poudre de métal dans un électrolyte, de composition proche mais inférieure à l'empilement géométrique maximal des grains, cette pâte étant pompée à partir d'un réservoir de stockage de la pâte de métal non oxydé pour aboutir, après traversée du générateur au cours de laquelle les grains de métal s'oxydent, à un réservoir de pâte oxydée.

L'inventeur du brevet américain US-A-4 172 924 a découvert qu'une telle pâte présente une forme fluide, concentrée en métal, stable et électrochimiquement réactive dans les deux sens. Ce brevet américain décrit aussi, à titre d'exemple de réalisation, un générateur qui permet de démontrer la validité du concept. Cependant, la réalisation pratique de générateurs industriels, à partir du procédé décrit dans ce brevet américain, visant à optimiser certaines caractéristiques essentielles, telles que l'économie, l'encombrement, la fiabilité, l'adaptation aux contraintes pratiques d'utilisation, par exemple pour l'alimentation de véhicules électriques, présente d'autres genres de difficultés, et n'a pas reçu de solution jusqu'ici, comme semble en témoigner l'absence d'utilisation effective de ce procédé américain breveté en 1979.

En effet, deux limitations apparaissent à ce procédé :
- pour que l'oxydation de la pâte située à l'anode génère une densité de puissance spécifique intéressante, il convient que l'épaisseur de pâte en contact avec le collecteur de courant anodique soit suffisamment faible ; par ailleurs, la surface développée des électrodes collectrices de courant que demande la puissance utilisée par un véhicule électrique implique une dimension large de l'anode. On observe incidemment qu'un dispositif de type vis d'Archimède tel qu'il est décrit dans le brevet américain US-A-472 924 (on se reportera également à sa figure), pour assurer le déplacement de la pâte, est incompatible avec cette configuration ;
- en outre, on observe, lors du fonctionnement de ce procédé, des bouchages accidentels des cavités, où la pâte forme des agglomérats solides ("cakes"), phénomènes connus pour les boues de forage dans les domaines pétroliers. En effet, là où des contraintes de cisaillement trop élevées sont exercées sur la pâte, celle-ci perd son homogénéité et subit une autofiltration. Les grains solides s'immobilisent, alors que la phase liquide continue de circuler. Ces contraintes non contrôlées apparaissent si la pression au sein de la pâte est trop grande, lors de variations brusques de pertes de charge dans le circuit d'écoulement, comme, par exemple, lors de changements de section des conduits. Il est alors évident que, dans de telles zones d'agglomération, la fraction en grains solides a augmenté et dépasse la concentration volumique critique en pigments, ce qui localement augmente la perte de charge, et le phénomène d'autofiltration s'accentue. Ce processus catastrophique conduit au cours du temps à l'arrêt de l'écoulement.

La présente invention a pour objectif de proposer un générateur électrochimique qui s'affranchit de ces différentes difficultés et qui permet ainsi la réalisation pratique, sous des formes industriellement et économiquement acceptables, du procédé décrit dans le brevet américain précité.

A cet effet, conformément à la présente invention, on fait circuler la pâte anodique en un mince ruban dans une cavité en forme de fente, des moyens étant proposés pour que la pâte anodique circule, en épousant en tout point la section de ladite cavité, sans discontinuité.

Par ailleurs, en plus de résoudre les problèmes posés dans la technique antérieure, cette circulation de la pâte suivant un mince ruban offre des avantages importants du point de vue de l'encombrement du générateur, cet encombrement pouvant être réduit de façon très importante, ce qui présente un très grand intérêt en particulier dans l'application à l'industrie automobile.

La présente invention a donc pour objet un générateur électrochimique destiné à produire de l'électricité par l'oxydation d'un métal et la réduction d'un gaz contenant de l'oxygène, ledit générateur comprenant au moins une cellule électrochimique constituée par :
- une cathode comprenant un support conducteur poreux alimenté par de l'oxygène ou un gaz contenant de l'oxygène et permettant à cet oxygène d'être réduit, ledit support conducteur poreux servant de collecteur cathodique ;
- un diaphragme en contact électrolytique avec ledit support conducteur poreux ;
- un support conducteur servant de collecteur anodique, l'anode étant constituée par ledit métal à l'état pulvérulent placé sous la forme d'une pâte anodique, en étant combiné avec un électrolyte,
ladite pâte anodique étant susceptible d'être déplacée en étant en contact, d'une part, avec ledit diaphragme et, d'autre part, avec ledit collecteur anodique et étant, lors de son déplacement, transformée progressivement, au moins partiellement, en une pâte de métal oxydé et l'oxygène étant réduit de façon à produire de l'énergie électrique, les électrodes étant connectées par un circuit externe, caractérisé par le fait que le support conducteur collecteur anodique, le diaphragme et le support conducteur poreux collecteur cathodique sont des éléments sensiblement de même forme, montés parallèlement entre eux, ledit diaphragme et ledit support collecteur anodique étant espacés entre eux pour constituer une cavité dans laquelle la pâte anodique est amenée à se déplacer suivant un ruban, le dispositif d'amenée de la pâte anodique dans ladite cavité étant conformé pour qu'en régime d'écoulement, la pâte épouse en tout point la section de la cavité sans discontinuité, en progressant avantageusement suivant des surfaces isobares ou sensiblement isobares.

La poudre métallique anodique est notamment choisie parmi les poudres de zinc, d'aluminium, de fer, de cadmium, de lithium, de magnésium ou de plomb. La poudre métallique anodique préférée est la poudre de zinc.

Par ailleurs, la coupe granulométrique de la poudre métallique anodique s'étend généralement entre 10⁻² µm et 100 µm.

D'une manière générale, l'électrolyte est avantageusement une solution aqueuse d'hydroxyde de sodium ou de potassium de concentration comprise entre 1 et 13 moles/litres.

La pâte anodique est avantageusement, par l'incorporation d'un gélifiant, réglée à une viscosité supérieure à 1 Pa.s, en particulier comprise entre 1 Pa.s et 500 Pa.s. A titre d'exemples de gélifiant, on peut citer la carboxyméthylcellulose et les polyacrylates.

La pâte anodique peut également renfermer une fraction (allant par exemple jusqu'à 20 parties en poids pour 100 parties en poids de poudre de métal anodique) d'au moins un adjuvant destiné à améliorer les caractéristiques électriques et/ou rhéologiques de la pâte, et choisi notamment parmi :
- les agents améliorant la conductivité électrique de la pâte, tels que le graphite pulvérulent ;
- les agents à faible coefficient de frottement, destinés à abaisser l'énergie perdue par frottement au sein de la pâte, comme le graphite pulvérulent, les polymères fluorés tels que le polytétrafluoroéthylène pulvérulent ;
- les agents favorisant la dispersion de la poudre métallique anodique au sein de la pâte, comme l'oxyde de zinc qui favorise la dispersion de la poudre de zinc par équilibre ionique ;
- les agents favorisant la réaction électrochimique, comme la cellulose (cellulose microcristalline) regulatrice du taux d'eau dans la phase liquide.

On peut citer en particulier, l'emploi de pâtes ayant la formulation suivante, pour 100 parties en poids de poudre de métal :
- de 16 à 50 parties en poids d'eau désionisée ;
- de 13 à 44 parties en poids de KOH ou NaOH ;
- de 0,5 à 6 parties en poids de gélifiant ;
- jusqu'à 20 parties en poids, en particulier de 6,5 à 20 parties en poids, d'au moins un adjuvant précité.

Le collecteur anodique peut être en métal, en graphite ou en une matière plastique rendue conductrice par l'incorporation d'une charge conductrice, ledit collecteur anodique devant par ailleurs être chimiquement inerte, c'est-à-dire ne pas dégrader la pâte et ne pas être attaquable par les composants de la pâte ; le support conducteur de la cathode peut être une feuille poreuse comportant une couche poreuse hydrofuge, par exemple en grains fins de polytétrafluoroéthylène fritté, à laquelle est accolée une couche conductrice poreuse, en métal fritté ou en carbone pulvérulent, éventuellement en mélange avec un liant et contenant, le cas échéant, un catalyseur pour réduire électrochimiquement l'oxygène, la couche hydrofuge étant disposée en regard d'une lame d'air, la couche conductrice servant de frontière entre l'électrolyte côté diaphragme et l'air ; quant au diaphragme, il peut être composé d'une feuille ou de plusieurs feuilles accolées de matière isolante microporeuse imprégnée d'électrolyte.

L'épaisseur "e" de la cavité pour le passage de la pâte anodique est notamment de l'ordre de 0,5 à 10 mm.

Conformément à un mode de réalisation particulièrement intéressant de la présente invention, le support collecteur anodique, le diaphragme, le support collecteur cathodique sont en forme de plaques rectangulaires, la cavité pour le passage de la pâte anodique ayant une géométrie correspondant à celle d'une plaque rectangulaire. Ladite plaque rectangulaire peut avantageusement avoir une longueur "L" de 5 à 100 cm et une largeur "1" de 1 à 50 cm, tout en respectant le rapport largeur "1" / épaisseur "e" de la cavité, qui est essentiellement au moins égal à 20.

Conformément à un premier mode de réalisation de l'invention, le dispositif d'introduction de la pâte en provenance d'un réservoir de stockage de pâte non oxydée et arrivant par un conduit est agencé pour distribuer ladite pâte à une seule cavité. A titre d'exemple, le dispositif d'introduction de la pâte dans une cavité peut consister en une pièce mécanique analogue à une filière plate, de profil en queue de poisson ou en porte-manteau, disposée immédiatement avant l'entrée dans ladite cavité, et capable de former, à sa sortie, le ruban de pâte à écoulement homogène.

Conformément à un second mode de réalisation de l'invention, le dispositif d'introduction de la pâte en provenance d'un réservoir de stockage de pâte non oxydée et arrivant par un conduit est agencé pour distribuer ladite pâte à plusieurs cavités, parallèles entre elles. A titre d'exemple, le dispositif d'introduction de la pâte dans plusieurs cavités parallèles entre elles peut consister en une pièce profilée analogue à une filière plate, dont les deux faces principales en regard se situent dans le prolongement des deux parois extrêmes délimitant les deux cavités extrêmes, un dispositif interne de guidage de la pâte étant par ailleurs prévu pour que celle-ci pénètre dans chaque cavité en étant guidée sur des parois inclinées, s'évasant vers l'extérieur desdites cavités.

Avantageusement, un dispositif analogue au dispositif d'introduction de la pâte dans une ou des cavités est disposé à la sortie, de manière symétrique. Cette disposition permet d'inverser le sens de circulation de la pâte.

Différentes variantes de montage mettant en oeuvre les principes de base de la présente invention peuvent être envisagées :

Le générateur peut comprendre plusieurs cellules montées en série. A titre d'exemple, on peut citer le montage à électrodes bipolaires suivant lequel, dans un boîtier, sont disposés successivement :
- un collecteur anodique ;
- un tronçon de pâte anodique circulante ;
- un diaphragme ;
- un collecteur pour la cathode à air ;
- un espaceur conducteur, perforé, disposé dans une lame d'air, servant également de collecteur cathodique ;
- à nouveau un collecteur anodique, lequel est en contact avec l'espaceur, en faisant suivre par la succession des éléments précédents autant de fois qu'il y a de cellules et en terminant par un collecteur relié à la borne ⊕ du générateur électrochimique, le premier collecteur anodique étant relié à la borne ⊖ du générateur électrochimique ;
le boîtier comportant des ouvertures pour mettre en communication les lames d'air avec l'extérieur.

Suivant une autre variante, dans un boîtier, sont disposés successivement :
- un collecteur anodique ;
- un tronçon de pâte anodique ;
- un diaphragme ;
- un support conducteur poreux collecteur cathodique ;
- un espaceur perforé conducteur également collecteur cathodique, disposé dans une lame d'air ;
- un support conducteur poreux collecteur cathodique ;
- un diaphragme ;
- un tronçon de pâte anodique ;
- un collecteur anodique,
et ainsi de suite jusqu'à un tronçon de pâte anodique et un collecteur anodique, tous les collecteurs anodiques étant reliés à la borne ⊖ du générateur électrochimique et tous les collecteurs cathodiques à la borne ⊕ dudit générateur, le boîtier comportant des ouvertures pour mettre en communication les lames d'air avec l'extérieur.

Conformément à encore une autre variante, il comporte une seule cellule, la cathode, le diaphragme et le collecteur anodique sont divisés en parties égales, disposées parallèlement dans un boîtier, dans l'ordre suivant :
- collecteur anodique ;
- tronçon de pâte anodique ;
- diaphragme ;
- collecteur poreux cathodique ;
- lame d'air pouvant contenir un espaceur isolant ;
- collecteur anodique,
et ainsi de suite jusqu'à un tronçon de cathode, la pâte circulant de l'entrée à la sortie suivant un seul chemin en épingle à cheveux, le boîtier comportant des ouvertures pour mettre en communication les lames d'air avec l'extérieur, la pâte pouvant par ailleurs circuler dans un sens ou dans l'autre.

Le générateur selon la présente invention comporte des moyens assurant le déplacement de la pâte qui peuvent être de type pompe, dispositif à pression de gaz ou piston, ces moyens de déplacement étant extérieurs à la cavité ou aux cavités de passage de la pâte et étant notamment capables de déplacer la pâte à une vitesse linéaire moyenne dans la cavité (ou dans chaque cavité) de 0,1 mm/minute à 50 mm/minute.

Par ailleurs, le générateur selon l'invention peut être à recharge mécanique (remplacement des blocs-réservoirs) ou hydraulique (remplacement d'une pâte usagée par une pâte neuve dans le même réservoir) ou encore être rechargeable électriquement.

Pour mieux illustrer l'objet de la présente invention, on va en décrire ci-après, à titre indicatif et non limitatif, plusieurs modes de réalisation avec référence au dessin annexé.

Sur ce dessin :
- la Figure 1 est une vue schématique en coupe longitudinale d'un générateur électrochimique métal-air conforme à un premier mode de réalisation de la présente invention, ledit générateur comportant plusieurs cellules montées en série ;
- la Figure 2 représente, à échelle agrandie, une vue partielle en coupe transversale selon II-II de la Figure 1 (sur cette figure, les proportions entre "1" et "e" ne sont pas respectées pour rester dans le format de la feuille) ;
- la Figure 3 représente, à une échelle encore agrandie, la pièce mécanique d'amenée de la pâte anodique dans la cavité en forme de fente se trouvant entre le collecteur anodique et le diaphragme d'une cellule du générateur ;
- la Figure 4 représente une vue en coupe longitudinale partielle d'un génerateur électrochimique métal-air conforme à un deuxième mode de réalisation de la présente invention ; et
- la Figure 5 représente une vue en coupe longitudinale partielle d'un générateur électrochimique métal-air conforme à un troisième mode de réalisation de la présente invention.

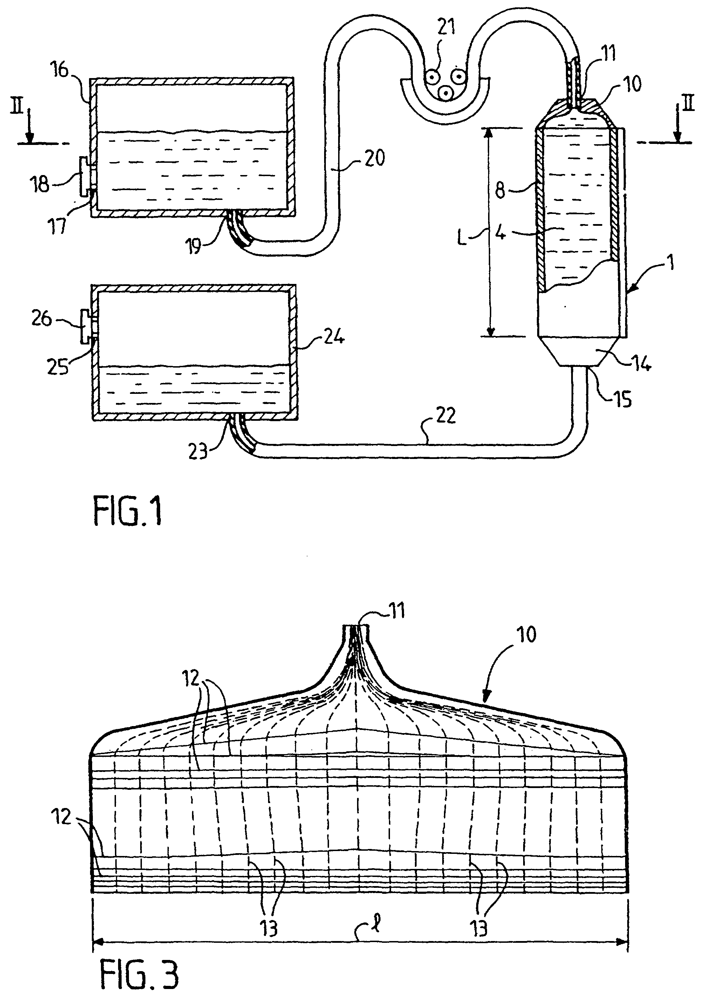

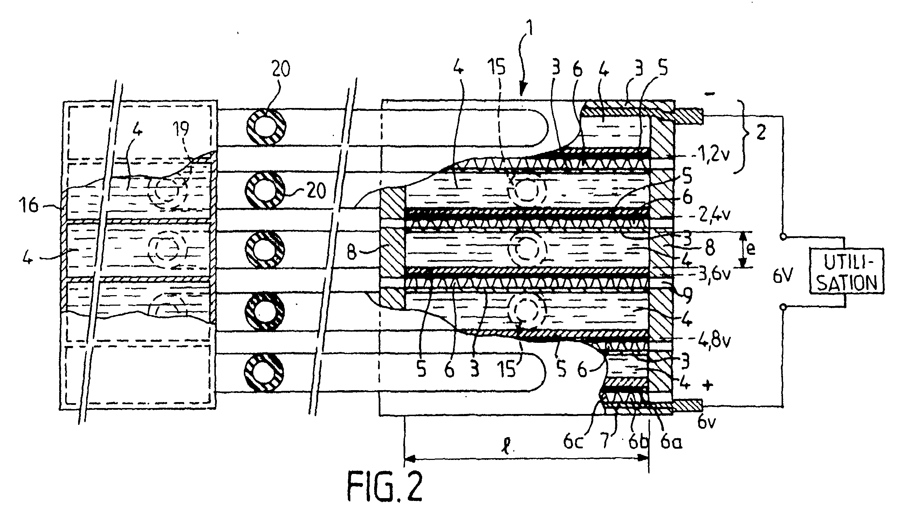

Si l'on se réfère tout d'abord aux Figures 1 et 2, on peut voir que l'on a désigné par 1, dans son ensemble, un genérateur électrochimique composé de cinq cellules 2 montées en série.

Chaque cellule 2 se compose des éléments ci-après, disposés de façon successive, en contact électrolytique entre eux :
- un collecteur de courant anodique 3 ;
- une section 4 de pâte anodique circulante ;
- un diaphragme ou séparateur électrolytique poreux 5 ; et
- une cathode à air 6.

Les collecteurs de courant 3 sont constitués par des plaques en matériau conducteur de l'électricité tel que défini ci-dessus, ces collecteurs étant notamment des plaques métalliques (en laiton par exemple), de carbone (graphite) ou d'une matière plastique rendue conductrice de l'électricité par l'incorporation d'une charge, par exemple de carbone.

Les anodes des cellules 2 sont constitués par un métal pulvérulent entrant dans la composition d'une pâte 4 formée par le mélange intime et parfaitement homogène de la poudre métallique avec un électrolyte gélifié :
- la métal est en particulier le zinc ; on peut également mentionner l'aluminium, le fer, le cadmium, le lithium, le magnésium et le plomb ;
- l'électrolyte est généralement un électrolyte aqueux, étant, par exemple, une solution concentrée d'hydroxyde de sodium ou de potassium ;
- le gélifiant est, par exemple, un gélifiant polymère hydrosoluble, comme la carboxyméthylcellulose.

La pâte anodique 4 doit présenter une viscosité élevée, généralement supérieure à 1 Pa.s, permettant d'assurer l'homogénéité de la dispersion des grains de métal et la stabilité de cette dispersion dans le temps et vis-à-vis des contraintes mécaniques extérieures, lesquelles peuvent être de l'ordre de quelques dizaines de Pa. De plus, cette viscosité de la pâte assure à celle-ci un comportement rhéologique adapté à sa circulation laminaire et en régime permanent ou transitoire.

Les diaphragmes électrolytiques poreux 5 sont constitués chacun par exemple par au moins une feuille de matière isolante microporeuse imprégnée d'électrolyte. Comme matière isolante microporeuse, on peut citer le polypropylène fibreux, tissé ou non tissé.

Les cathodes à air 6 sont chacune constituées par un support microporeux conducteur 6a (collecteur de courant cathodique), qui est en contact avec le diaphragme 5 et à l'opposé duquel est ménagé un espace 6b (lame d'air) permettant la distribution de l'air sur l'ensemble de la surface de la cathode et contenant un espaceur 6c, qui est en même temps également conducteur de l'électricité et collecteur de courant cathodique. Cet espaceur-collecteur 6c est en contact électrique avec le collecteur de courant anodique 3, associé à la cellule 2 voisine, ce qui permet de constituer des électrodes bipolaires. Le collecteur 6c de la dernière cellule du générateur (celle du bas sur la Figure 2) est en contact avec un collecteur 7 du générateur 1 relié à la borne ⊕, le collecteur 3 de la première cellule étant relié à la borne ⊖. Le collecteur 7 pourrait être absent, auquel cas le collecteur 6c constituerait la borne ⊕.

Les supports microporeux conducteurs 6a sont, par exemple, formés des feuilles poreuses bicouches telles que définies ci-dessus. Quant aux espaceurs-collecteurs 6c, ils sont constitués, par exemple, par une fine tôle ondulée, agencée ou perforée pour permettre le passage de l'air.

Les éléments 3, 5, 6a, 6c composant les différentes cellules 2 et l'élément collecteur 7, disposés parallèlement entre eux, ont la forme de rectangles de mêmes dimensions. La pâte anodique 4 circule suivant un mince ruban, d'épaisseur constante entre les collecteurs 3 et les diaphragmes 5 des différentes cellules 2.

Tous les éléments qui viennent d'être décrits dans leur composition et leurs dispositions relatives sont enfermés dans un boîtier 8 qui comporte des ouvertures 9 permettant l'accès de l'air extérieur dans les espaces 6b.

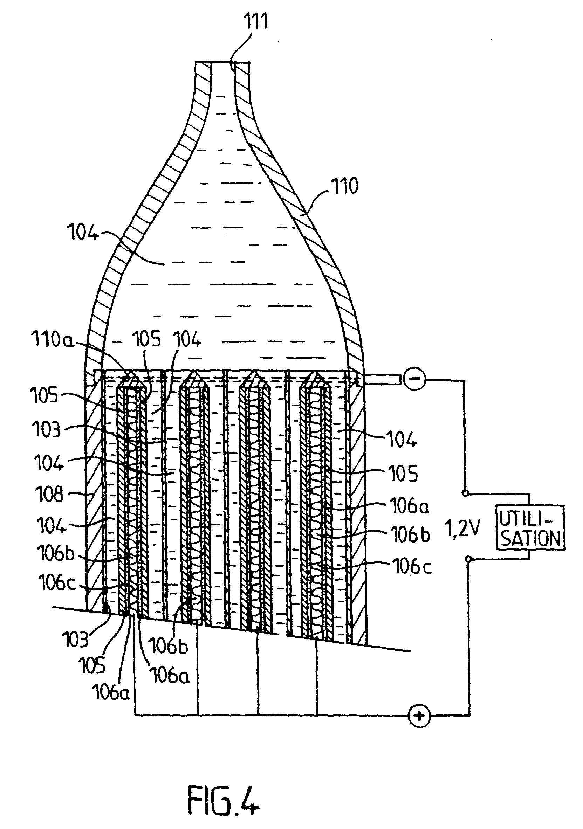

A sa partie supérieure (si l'on regarde la Figure 1), pour assurer l'arrivée de la pâte 4 dans des conditions hermétiques dans chaque espace entre collecteur 3 et diaphragme 5, le boîtier 8 est configuré à la manière d'une filière plate 10 ayant un profil en queue de poisson et comportant une ouverture circulaire centrale 11 d'entrée. Les deux parois sensiblement planes opposées de la pièce 10 d'amenée de la pâte en forme de filière plate, sont au droit respectivement du collecteur 3 et du diaphragme 5 de la cellule 2. La géométrie de cette pièce est donc telle qu'en régime (permanent ou transitoire) d'écoulement de la pâte 4, toute la surface de cette dernière dans la section de sortie de la pièce 10 est isobare. Ladite pièce 10 ne présente ni arête vive, ni point anguleux, ni obstacle susceptible de dégrader la structure de la pâte ou empêcher son écoulement. Sur la Figure 3 qui montre, à plus grande échelle, cette pièce 10, on a symbolisé les surfaces isobares 12, ainsi que les lignes de champ de vitesse 13.

La sortie de la pâte 4 à partir de chaque cellule 2 s'effectue de la même façon, par une pièce 14 de même forme que la pièce 10, mais disposée symétriquement, comportant une ouverture circulaire centrale 15 de sortie. Cette configuration permet de faire circuler la pâte dans l'un ou l'autre sens, sans influence sur les opérations électriques. Ainsi, dans une mise en oeuvre possible, la pâte peut effectuer plusieurs aller-retour, d'un réservoir à l'autre, et subir à chaque passage une oxydation partielle. Une autre mise en oeuvre possible réside dans la recharge électrique du générateur : en appliquant les principes de l'invention, par exemple en inversant le sens de circulation de la pâte oxydée dans le montage de la Figure 1 et en imposant une densité de courant de polarité convenable aux bornes du générateur, pour réduire par voie électrolytique la pâte oxydée en pâte métallique, de nouveau prête à l'emploi.

Pour chaque cellule 2, la pâte 4, non oxydée, est stockée dans un compartiment d'un réservoir 16. Chaque compartiment comporte latéralement un orifice de remplissage 17 normalement fermé hermétiquement par un bouchon 18, et, dans son fond, un orifice de sortie 19. Ce dernier est relié à l'ouverture 11 par un tuyau souple 20. Une pompe péristaltique 21, commune à tous les tuyaux souples 20 et montée sur le trajet de ceux-ci, permet la mise en mouvement de la pâte 4 dans chacun d'eux.

Un tuyau souple 22 relie, de la même façon, l'ouverture de sortie 15 à l'orifice d'entrée 23 de la pâte oxydée pratiqué dans le fond d'un compartiment d'un réservoir 24 de pâte oxydée. Chaque compartiment comporte également une ouverture latérale de vidange 25 normalement fermée par un bouchon 26.

Pour faire fonctionner le générateur électrochimique 1, les électrodes bipolaires qui viennent d'être décrites étant connectées en série, les compartiments du réservoir 16 sont initialement remplis de pâte 4, ceux du réservoir 24 étant vides. La pompe péristaltique 21 est mise en marche, la pâte 4 arrivant alors dans les cavités entre les collecteurs 3 et les séparateurs 5, et s'écoulant dans celles-ci de façon régulière sans discontinuité, dans les conditions indiquées ci-dessus.

Dans ces cavités, le métal de la pâte 4 subit une oxydation électrochimique et simultanément l'oxygène de l'air est réduit à la cathode. Une différence de potentiel entre l'anode et la cathode de chaque cellule est générée spontanément, les cellules étant ici comme indiqué, associées en série pour obtenir la tension désirée (6 volts dans l'exemple représenté). Pour obtenir l'intensité souhaitée, on branche en parallèle le nombre de générateurs 1 nécessaire.

Une fois toute la pâte 4 oxydée, on peut vider le réservoir 24 et introduire de la pâte neuve dans le réservoir 16. On peut également réduire électrolytiquement la pâte 4 oxydée en faisant tourner le moteur péristaltique 21 dans le sens inverse et en imposant un courant inverse aux bornes des deux collecteurs extrêmes 3 et 7. On peut aussi envisager de régénérer la pâte 4 oxydée dans une centrale extérieure.

Si l'on se réfère maintenant à la Figure 4, on peut voir que l'on a représenté par 101 dans son ensemble un générateur électrochimique formé à partir des mêmes éléments que le générateur 1, mais ceux-ci étant disposés de manière différente. Dans ce qui suit, les éléments du générateur 101 sont désignés par des chiffres de référence supérieurs de 100 par rapport aux mêmes éléments du générateur 1.

La disposition des éléments du générateur 101 est la suivante, de gauche à droite si l'on regarde la Figure 4 :
- un collecteur de courant anodique 103 ;
- une section de pâte anodique 104 ;
- un diaphragme ou séparateur électrolytique poreux 105
- un support microporeux conducteur 106a ;
- une lame d'air 106b dans laquelle se trouve un espaceur conducteur 106c, collecteur de courant pour la cathode à air ainsi formée avec le support microporeux conducteur 106a précité et la lame d'air 106b précitée ;
- un support microporeux conducteur 106a (constituant avec l'espaceur 106c précité et la lame d'air 106b précitée une autre cathode à air, accolée à la précédente) ;
- un diaphragme 105 ;
- une section de pâte anodique 104 ;
- un collecteur de courant anodique 103 ;
- à nouveau une section de pâte anodique, et ainsi de suite jusqu'à un dernier collecteur de courant anodique 103.

Dans ce montage, suivant lequel une lame d'air 106b assure la distribution de l'air sur deux supports microporeux conducteurs 106a, les collecteurs anodiques 103 et les collecteurs cathodiques 106c sont branchés en parallèle, les premiers à la borne ⊖ et les seconds, à la borne ⊕ du générateur 101.

Les éléments 103, 105, 106a et 106c, en forme de rectangles, sont disposés parallèlement entre eux, dans un boîtier 108 comportant des moyens de type entretoise pour assurer les écartements voulus entre les collecteurs 103 et les diaphragmes 105 en vue du passage de la pâte anodique 104. Le boîtier 108 a la forme d'un étui ouvert à ses deux extrémités, comportant deux faces parallèles en regard des deux collecteurs 103 d'extrémité et deux autres faces perpendiculaires aux précédentes, en regard des bordures longitudinales des éléments du générateur 101.

Par ailleurs, les lames d'air 106b sont en communication avec l'extérieur par des ouvertures pratiquées dans le boîtier 108.

Sur les bordures supérieures et inférieures si l'on regarde la Figure 4 des quatre groupes d'éléments 105-106a- 106c- 106a-105, sont fixées par leur base, par exemple par collage, des barrettes 110a à profil en forme de triangle isocèle. Le rôle de ces barrettes 210a est indiqué plus loin.

Des éléments profilés 110 guidant l'entrée et la sortie de la pâte 104 sont fixés hermétiquement par tous moyens voulus sur chacun des deux côtés ouverts du boîtier 108. Sur la Figure 4, on peut voir le profilé 110 d'amenée de la pâte, qui s'effile pour former une partie tubulaire centrale 111 sur laquelle sera raccordé un tube unique amenant la pâte 104 à partir d'un réservoir de pâte non oxydée. L'élément 110 a également la forme d'une filière plate, dont les deux faces principales en regard se situent en position de montage, dans le prolongement des faces du boîtier 108 parallèles aux différents éléments composant de les électrodes. L'élément profilé de sortie est identique à l'élément 110 et raccordé de la même façon à un réservoir de pâte oxydée. Des barrettes à profil en forme de triangle, analogues aux barrettes 110a, sont montées de la même façon à la partie inférieure.

Un moyen de pompage de la pâte est également prévu.

Dans ces conditions, lorsque la pâte 104 est amenée dans les différentes cavités en forme de fentes situées entre les collecteurs 103 et les diaphragmes 105, elle est guidée dans ces cavités dans les mêmes conditions que dans le cas du premier mode de réalisation, c'est-à-dire sans discontinuité, grâce aux parois inclinées des barrettes 110a, et en ce qui concerne les cavités extrêmes, également à la forme profilée des parois de la pièce 110.

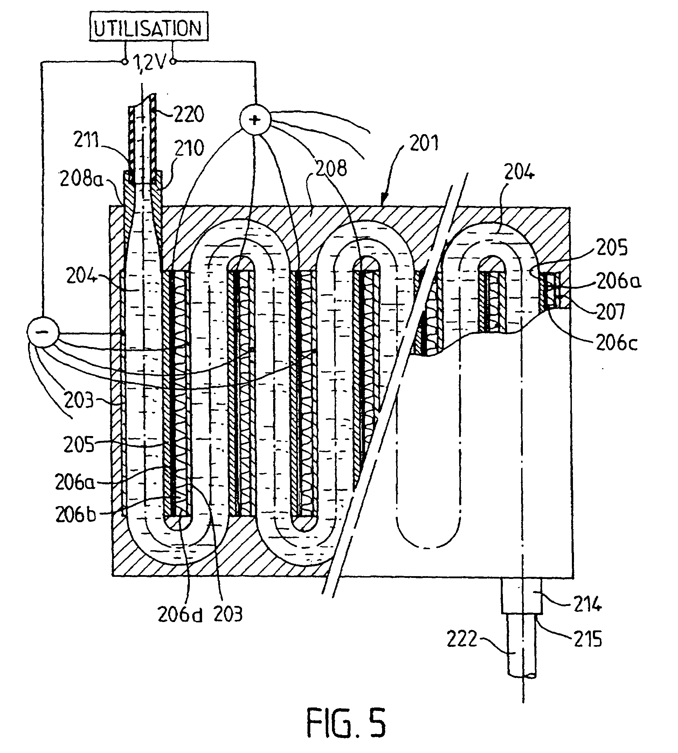

Si l'on se réfère maintenant à la Figure 5, on peut voir que l'on a représenté par 201 dans son ensemble un générateur électrochimique conforme à un troisième mode de réalisation de la présente invention. Le générateur 201 comporte les éléments suivants montés parallèlement entre eux dans un boîtier 208. Ces éléments, désignés par des chiffres de référence supérieurs de 200 aux éléments de même type du générateur 1, sont, de gauche à droite si l'on regarde la Figure 5 :
- un collecteur de courant anodique 203 ;
- une section de pâte anodique circulante 204 ;
- un diaphragme 205 ;
- un support microporeux conducteur 206a ;
- une lame d'air 206b contenant un espaceur 206d lequel présente cependant ici la particularité d'être isolant ;
- un autre collecteur de courant anodique 203,
et ainsi de suite jusqu'à un collecteur final 207, qui est du type des collecteurs 203, et qui vient s'appliquer contre un dernier espaceur 206c qui, lui, est conducteur.

La pâte anodique 204 circule suivant un seul mince ruban d'épaisseur constante entre les collecteurs 203 et les diaphragmes 205, ce ruban cheminant suivant un trajet en épingle à cheveux, le boîtier 208 étant par ailleurs configuré pour permettre le cheminement précité de la pâte anodique 204.

Le boîtier 208 comporte, à sa partie supérieure et au droit du premier tronçon de pâte 204, c'est-à-dire de l'espace entre le premier collecteur 203 et le premier diaphragme 205, une fente 208a dans laquelle est introduite une pièce 210 analogue à la pièce 10 du premier mode de réalisation, dont l'embouchure d'entrée centrale 211 reçoit un tube 220 d'amenée de la pâte 204 à partir d'un réservoir (non représenté) le long duquel est montée, de la même façon, une pompe péristaltique.

Le boîtier 208 comporte, à sa partie inférieure et au droit du dernier tronçon de pâte 204, une fente dans laquelle est introduite une pièce 214 analogue à la pièce 14 du premier mode de réalisation, dont l'embouchure d'entrée centrale 215 reçoit un tube 222 de sortie de la pâte oxydée 204, acheminant celle-ci à un réservoir (non représenté).

Ce montage correspond à une seule cellule, dont le collecteur pour l'anode (relié à la borne ⊖), le diaphragme ainsi que la cathode à air reliée à la borne ⊕, sont en plusieurs parties.

Dans les deuxième et troisième modes de réalisation de la présente invention, les blocs représentés permettent d'obtenir chacun une tension de 1,2 volt sous décharge. Pour obtenir la tension standard de 6 volts, cinq de ces blocs seront branchés en série.

### Exemple

On a utilisé le générateur électrochimique 1 conforme au mode de réalisation des Figures 1 à 3. Chaque cellule de 1,5 volt en circuit ouvert possède une épaisseur de 0,5 cm, dont 0,3 cm de ruban de pâte 4. Pour une cellule de 6 volts, l'épaisseur est donc de 2,5 cm hors boîtier extérieur. La hauteur de ce dernier dans chaque cellule, est de 20 cm et sa largeur de 6 cm.

La pâte 4 utilisée avait la formulation suivante :
- Poudre de zinc d'une granulométrie moyenne de 10 µm 100 parties en poids
- Eau 45 " " "
- KOH 38 " " "
- Gélifiant 2 " " "
- Adjuvants 12 " " "

La viscosité de la pâte 4, adaptée à l'écoulement en rubans dans le dispositif, est de 3 Pa.s.

La vitesse de circulation des rubans de pâte dans chaque cellule était de 0,6 mm/minute.

Cette configuration offre une densité d'énergie électrique utilisable de l'ordre de 230 Wh/kg de générateur, soit 550 Wh/l de générateur pour une épaisseur de cellule de 0,5 cm. Les densités de puissance sont de l'ordre de 20 à 100 milliwatts/cm². Ces résultats sont reproductibles plusieurs fois avec une pâte de zinc qui a subi plusieurs cycles électriques décharge-recharge.

## Revendications

1. Générateur électrochimique destiné à produire de l'électricité par l'oxydation d'un métal et la réduction d'un gaz contenant de l'oxygène, ledit générateur (1 ; 101 ; 201) comprenant au moins une cellule électrochimique (2) constituée par :
- une cathode (6) comprenant un support conducteur poreux (6a ; 106a ; 206a) alimenté par de l'oxygène ou un gaz contenant de l'oxygène (6b; 106b ; 206b) et permettant à cet oxygène d'être réduit, ledit support conducteur poreux (6a ; 106a ; 206a) servant de collecteur cathodique ;
- un diaphragme (5 ; 105 ; 205) en contact électrolytique avec ledit support conducteur poreux (6a ; 106a ; 206a) ;
- un support conducteur servant de collecteur anodique (3 ; 103 ; 203), l'anode étant constituée par ledit métal à l'état pulvérulent placé sous la forme d'une pâte anodique (4 ; 104 ; 204), en étant combiné avec un électrolyte,
ladite pâte anodique (4 ; 104 ; 204) étant susceptible d'être déplacée en étant en contact, d'une part, avec ledit diaphragme (5 ; 105 ; 205) et, d'autre part, avec ledit collecteur anodique (3 ; 103 ; 203) et étant, lors de son déplacement, transformée progressivement, au moins partiellement, en une pâte de métal oxydé et l'oxygène étant réduit de façon à produire de l'énergie électrique, les électrodes étant connectées par un circuit externe, **caractérisé par le fait que** le support conducteur poreux (3 ; 103 ; 203), collecteur anodique, le diaphragme (5 ; 105 ; 205) et le support conducteur (6a ; 106a ; 206a), collecteur cathodique, sont des éléments sensiblement de même forme, montés parallèlement entre eux, ledit diaphragme (5 ; 105 ; 205) et ledit support collecteur anodique (3 ; 103 ; 203) étant espacés entre eux pour constituer une cavité dans laquelle la pâte anodique (4 ; 104 ; 204) est amenée à se déplacer suivant un ruban, le dispositif (10 ; 110-110a ; 210) d'amenée de la pâte anodique (4 ; 104 ; 204) dans ladite cavité étant conformé pour qu'en régime d'écoulement, la pâte épouse en tout point la section de la cavité sans discontinuité.

2. Générateur électrochimique selon la revendication 1, **caractérisé par le fait que** le dispositif (10 ; 110-110a ; 210) d'amenée de la pâte anodique est conformé pour qu'en régime permanent, la pâte progresse dans la cavité suivant des surfaces isobares ou sensiblement isobares.

3. Générateur électrochimique selon l'une des revendications 1 et 2, **caractérisé par le fait que** la poudre métallique anodique est choisie parmi les poudres de zinc, d'aluminium, de fer, de cadmium, de lithium, de magnésium ou de plomb, étant notamment de la poudre de zinc.

4. Générateur électrochimique selon l'une des revendications 1 à 3, **caractérisé par le fait que** la poudre métallique anodique a une coupe granulométrique comprise entre 10⁻² µm et 100 µm.

5. Générateur électrochimique selon l'une des revendications 1 à 4, **caractérisé par le fait que** l'électrolyte est une solution aqueuse d'hydroxyde de sodium ou de potassium de concentration comprise entre 1 et 13 moles/litre.

6. Générateur électrochimique selon l'une des revendications 1 à 5, **caractérisé par le fait que** la pâte est, par l'incorporation d'un gélifiant, réglée à une viscosité supérieure à 1 Pa.s, en particulier comprise entre 1 Pa.s et 500 Pa.s.

7. Générateur électrochimique selon l'une des revendications 1 à 6, **caractérisé par le fait que** la pâte anodique (14 ; 104 ; 204) renferme une fraction d'au moins un adjuvant destiné à améliorer lès caractéristiques électriques et/ou rhéologiques de la pâte, et choisi notamment parmi :
- les agents améliorant la conductivité électrique de la pâte, tels que le graphite pulvérulent ;
- les agents à faible coefficient de frottement, destinés à abaisser l'énergie perdue par frottement au sein de la pâte, comme le graphite pulvérulent, les polymères fluorés tels que le polytétrafluoroéthylène pulvérulent ;
- les agents favorisant la dispersion de la poudre métallique anodique au sein de la pâte, comme l'oxyde de zinc qui favorise la dispersion de la poudre de zinc par équilibre ionique ;
- les agents favorisant la réaction électrochimique, comme la cellulose régulatrice du taux d'eau dans la phase liquide.

8. Générateur électrochimique selon l'une des revendications 1 à 7, **caractérisé par le fait que** la pâte a la formulation suivante, pour 100 parties en poids de poudre de métal :
• de 16 à 50 parties en poids d'eau désionisée ;
• de 13 à 44 parties en poids de KOH ou NaOH ;
• de 0,5 à 6 parties en poids d'un gélifiant tel que la carboxyméthyl cellulose et les polyacrylates ;
• jusqu'à 20 parties en poids, en particulier de 6,5 à 20 parties en poids, d'au moins un adjuvant tel que défini à la revendication 7.

9. Générateur électrochimique selon l'une des revendications 1 à 8, **caractérisé par le fait que** le collecteur anodique (3 ; 103 ; 203), chimiquement inerte, est en métal, en graphite ou en une matière plastique rendue conductrice par l'incorporation d'une charge conductrice.

10. Générateur électrochimique selon l'une des revendications 1 à 8, **caractérisé par le fait que** le support conducteur (6a ; 106a ; 206a) de la cathode (6) est une feuille poreuse comportant une couche poreuse hydrofuge, par exemple en grains fins de polytétrafluoroéthylène fritté, à laquelle est accolée une couche conductrice poreuse, en métal fritté ou en carbone pulvérulent, éventuellement en mélange avec un liant et contenant, le cas échéant, un catalyseur pour réduire électrochimiquement l'oxygène, la couche hydrofuge étant disposée en regard d'une lame d'air, la couche conductrice servant de frontière entre l'éléctrolyte côté diaphragme et l'air.

11. Générateur électrochimique selon l'une des revendications 1 à 10, **caractérisé par le fait que** le diaphragme (5 ; 105 ; 205) est composé d'une feuille ou de plusieurs feuilles accolées de matière isolante microporeuse imprégnée d'électrolyte.

12. Générateur électrochimique selon l'une des revendications 1 à 11, **caractérisé par le fait que** l'épaisseur "e" de la cavité pour le passage de la pâte anodique (4 ; 104 ; 204) est de l'ordre de 0,5 à 10 mm.

13. Générateur électrochimique selon l'une des revendications 1 à 12, **caractérisé par le fait que** le support collecteur anodique (3 ; 103 ; 203), le diaphragme (5 ; 105 ; 205), le support collecteur cathodique (6a ; 106a ; 206a) sont en forme de plaques rectangulaires, la cavité pour le passage de la pâte anodique (4 ; 104 ; 204) ayant une géométrie correspondant à celle d'une plaque rectangulaire.

14. Générateur électrochimique selon la revendication 13, **caractérisé par le fait qu'**une plaque rectangulaire a une longueur "L" de 5 à 10 cm et une largeur "l" de 1 à 50 cm, le rapport largeur "l" / épaisseur "e" de la cavité étant essentiellement au moins égal à 20.

15. Générateur électrochimique selon l'une des revendications 1 à 14, **caractérisé par le fait que** le dispositif (10 ; 210) d'introduction de la pâte (4 ; 204) en provenance d'un réservoir (16) de stockage de pâte non oxydée et arrivant par un conduit (11 ; 211) est agencé pour distribuer ladite pâte (4 ; 204) à une seule cavité.

16. Générateur électrochimique selon la revendication 15, **caractérisé par le fait que** le dispositif (10 ; 210) d'introduction de la pâte (4 ; 204) dans une cavité consiste en une pièce mécanique analogue à une filière plate, de profil en queue de poisson ou en porte-manteau, disposée immédiatement avant l'entrée dans ladite cavité, et capable de former, à sa sortie, le ruban de pâte (4 ; 204) à écoulement homogène.

17. Générateur électrochimique selon l'une des revendications 1 à 16, **caractérisé par le fait que** le dispositif (110 - 110a) d'introduction de la pâte (104) en provenance d'un réservoir de stockage de pâte non oxydée et arrivant par un conduit (111) est agencé pour distribuer ladite pâte (104) à plusieurs cavités, parallèles entre elles.

18. Générateur électrochimique selon la revendication 17, **caractérisé par le fait que** le dispositif (110 - 110a) d'introduction de la pâte (104) dans plusieurs cavités parallèles entre elles, consiste en une pièce profilée (110) analogue à une filière plate, dont les deux faces principales en regard se situent dans le prolongement des deux parois extrêmes délimitant les deux cavités extrêmes, un dispositif interne (110a) de guidage de la pâte (104) étant par ailleurs prévu pour que celle-ci pénètre dans chaque cavité en étant guidée sur des parois inclinées, s'évasant vers l'extérieur desdites cavités.

19. Générateur électrochimique selon l'une des revendications 15 à 18, **caractérisé par le fait qu'**un dispositif (14 ; 214) analogue au dispositif d'introduction (10 ; 210) de la pâte dans une ou des cavités est disposé à la sortie, de manière symétrique.

20. Générateur électrochimique selon l'une des revendications 1 à 19, **caractérisé par le fait qu'**il comprend plusieurs cellules (2) montées en série.

21. Générateur électrochimique selon la revendication 20, **caractérisé par le fait que**, dans un boîtier (8), sont disposés successivement :
- un collecteur anodique (3) ;
- un tronçon de pâte anodique circulante (4) ;
- un diaphragme (5) ;
- un collecteur (6a) pour la cathode à air (6) ;
- un espaceur (6c) conducteur, perforé, disposé dans une lame d'air (6b) et servant également de collecteur cathodique ;
- à nouveau un collecteur anodique (3), lequel est en contact avec l'espaceur (6c), en faisant suivre par la succession des éléments précédents autant de fois qu'il y a de cellules (2) et en terminant par un collecteur (7) relié à la borne ⊕ du générateur électrochimique (1), le premier collecteur pour l'anode (3) étant relié à la borne e du générateur électrochimique (1) ;
le boîtier (8) comportant des ouvertures (9) pour mettre en communication les lames d'air (6b) avec l'extérieur.

22. Générateur électrochimique selon l'une des revendications 1 à 19, **caractérisé par** le fait, dans un boîtier (108), sont disposés successivement :
- un collecteur anodique (103) ;
- un tronçon de pâte anodique (104) ;
- un diaphragme (105) ;
- un support conducteur poreux (106a) collecteur cathodique ;
- un espaceur perforé conducteur (106c) également collecteur cathodique, disposé dans une lame d'air (106b) ;
- un support conducteur poreux (106a) collecteur cathodique ;
- un diaphragme (105) ;
- un tronçon de pâte anodique (104) ;
- un collecteur anodique (103),
et ainsi de suite jusqu'à un tronçon de pâte anodique (104) et un collecteur anodique (103), tous les collecteurs anodiques (103) étant reliés à la borne ⊖ du générateur électrochimique (101) et tous les collecteurs cathodiques (106a-106c), à la borne ⊕ dudit générateur, le boîtier (108) comportant des ouvertures pour mettre en communication les lames d'air avec l'extérieur.

23. Générateur électrochimique selon l'une des revendications 1 à 17, **caractérisé par le fait qu'**il comporte une seule cellule, que la cathode, le diaphragme, et le collecteur anodique sont divisés en parties égales, disposées parallèlement dans un boîtier (208), dans l'ordre suivant :
- collecteur anodique (203) ;
- tronçon de pâte anodique (204) ;
- diaphragme (205) ;
- collecteur poreux cathodique (206a) ;
- lame d'air (206b) pouvant contenir un espaceur isolant (206d) ;
- collecteur anodique (203),
et ainsi de suite jusqu'à un tronçon de cathode (206a-206b-206c-207), la pâte (204) circulant de l'entrée à la sortie suivant un seul chemin en épingle à cheveux, le boîtier (208) comportant des ouvertures pour mettre en communication les lames d'air (206b) avec l'extérieur, la pâte (204) pouvant par ailleurs circuler dans un sens ou dans l'autre.

24. Générateur électrochimique selon l'une des revendications 1 à 23, **caractérisé par le fait qu'**il comporte des moyens assurant le déplacement de la pâte (4 ; 104 ; 204) de type pompe, dispositif à pression de gaz ou piston, ces moyens de déplacement étant extérieurs à la cavité ou aux cavités de passage de la pâte (4 ; 104 ; 204) et étant notamment capables de déplacer la pâte (4 ; 104 ; 204) à une vitesse linéaire moyenne dans la cavité de 0,1 à 50 mm/minute.

25. Générateur électrochimique selon l'une des revendications 1 à 24, **caractérisé par le fait qu'**il est à recharge mécanique ou hydraulique, ou encore qu'il est rechargeable électriquement.

## Patentansprüche

1. Elektrochemischer Stromerzeuger zur Elektrizitätserzeugung durch Oxidation eines Metalls und Reduktion eines sauerstoffhaltigen Gases, wobei der Stromerzeuger (1; 101; 201) wenigstens eine elektrochemische Zelle (2) umfaßt, die gebildet wird durch:
- eine Kathode (6), die einen leitenden porösen Träger umfaßt (6a; 106a; 206a), der durch Sauerstoff oder durch sauerstoffhaltiges Gas (6b; 106b; 206b) gespeist wird und es diesem Sauerstoff ermöglicht, reduziert zu werden, wobei der leitende poröse Träger (6a; 106a; 206a) als kathodischer Kollektor dient;
- ein Diaphragma (5; 105; 205) in elektrolytischem Kontakt mit diesem leitenden porösen Träger (6a; 106a; 206a);
- einen leitenden Träger, der als anodischer Kollektor (3; 103; 203) dient, wobei die Anode durch dieses Metall in pulverisiertem Zustand das in die Form einer anodischen Paste (4; 104; 204) gebracht wurde, mit einem Elektrolyt kombiniert, gebildet ist,
wobei diese anodische Paste (4; 104; 204) geeignet ist, bewegt zu werden, indem sie einerseits mit dem Diaphragma (5; 105; 205) und andererseits mit dem anodischen Kollektor (3; 103; 203) in Kontakt kommt und bei ihrer Bewegung fortschreitend wenigstens teilweise zu einer Metalloxidpaste umgewandelt wird und der Sauerstoff derart reduziert wird, dass elektrische Energie erzeugt wird, wobei die Elektroden durch einen äußeren Kreis verbunden sind, **dadurch gekennzeichnet, dass** der leitende poröse Träger (3; 103; 203), der anodische Kollektor, das Diaphragma (5; 105; 205) und der leitende Träger (6a; 106a; 206a), der kathodische Kollektor Elemente von im wesentlichen gleicher Form sind, die parallel zueinander angebracht sind, wobei das Diaphragma (5; 105; 205) und der anodische Kollektorträger (3; 103; 203) untereinander beabstandet sind, um eine Lücke zu bilden, in der die anodische Paste (4; 104; 204) zugeführt wird, um sich gemäß eines Bandes zu bewegen, und wobei die Vorrichtung (10; 110-110a; 210) zur Zufuhr der anodischen Paste (4; 104; 204) in diese Lücke so ausgeformt ist, dass bei Umlaufschluß sich die Paste in jedem Punkt dem Querschnitt der Lücke ohne Diskontinuität anschmiegt.

2. Elektrochemischer Stromerzeuger nach Anspruch 1, **dadurch gekennzeichnet, dass** die Vorrichtung (10; 110-110a; 210) zur Zufuhr der anodischen Paste so ausgebildet ist, dass bei Dauerbetrieb die Paste in der Lücke gemäß isobaren oder im wesentlichen isobaren Flächen voranschreitet.

3. Elektrochemischer Stromerzeuger nach einem der Ansprüche 1 und 2, **dadurch gekennzeichnet, dass** das anodische metallische Pulver unter den Pulvern von Zink, Aluminium, Eisen, Cadmium, Lithium, Magnesium oder Blei, insbesondere Zinkpulver, gewählt ist.

4. Elektrochemischer Stromerzeuger nach einem der Ansprüche 1 bis 3, **dadurch gekennzeichnet, dass** das anodische metallische Pulver eine granulometrische Fraktion zwischen 10⁻² µm und 100 µm hat.

5. Elektrochemischer Stromerzeuger nach einem der Ansprüche 1 bis 4, **dadurch gekennzeichnet, dass** der Elektrolyt eine wässerige Natrium- oder Kaliumhydroxidlösung einer Konzentration zwischen 1 und 13 Mol/Liter ist.

6. Elektrochemischer Stromerzeuger nach einem der Ansprüche 1 bis 5, **dadurch gekennzeichnet, dass** die Paste durch Einverleiben eines Gelbildners auf eine Viskosität über 1 Pa.s, insbesondere zwischen 1 Pa.s und 500 Pa.s eingestellt wird.

7. Elektrochemischer Stromerzeuger nach einem der Ansprüche 1 bis 6, **dadurch gekennzeichnet, dass** die anodische Paste (14; 104; 204) eine Fraktion von wenigstens einem Zusatzstoff zur Verbesserung der elektrischen und/oder rheologischen Charakteristika der Paste einschließt und insbesondere gewählt ist aus:
- den Reagenzien, die die elektrische Leitfähigkeit der Paste verbessern wie feinpulveriger Graphit;
- den Reagenzien mit einem geringen Reibungskoeffizienten zum Vermindern der Energie die durch Reibung innerhalb der Paste, wie feinpulveriger Graphit, fluorierte Polymere wie feinpulveriges Polytetrafluorethlyen, verloren geht;
- den Reagenzien, die die Dispersion des anodischen metallischen Pulvers in der Paste begünstigen wie Zinkoxyd, das die Dispersion des Zinkpulvers durch ionisches Gleichgewicht begünstigt;
- den Reagenzien, die die elektrochemische Reaktion begünstigen, wie den Wassergehalt in der Flüssigphase regulierende Zellulose.

8. Elektrochemischer Stromerzeuger nach einem der Ansprüche 1 bis 7, **dadurch gekennzeichnet, dass** die Paste die folgende Formulierung für 100 Gewichtsteile Metallpulver hat:
- 16 bis 50 Gewichtsteile entionisierten Wassers;
- 13 bis 44 Gewichtsteile KOH oder NaOH;
- 0,5 bis 6 Gewichtsteile eines Gelbildners wie Carboxymethylzellulose und die Polyacrylate;
- bis zu 20 Gewichtsteile, insbesondere 6,5 bis 20 Gewichtsteile wenigstens eines Zusatzes wie im Anspruch 7 definiert.

9. Elektrochemischer Stromerzeuger nach einem der Ansprüche 1 bis 8, **dadurch gekennzeichnet, dass** der chemisch inerte anodische Kollektor (3; 103; 203) aus Metall, aus Graphit oder aus einem Plastikmaterial besteht, das durch Einverleiben einer leitenden Charge leitend gemacht wurde.

10. Elektrochemischer Stromerzeuger nach einem der Ansprüche 1 bis 8, **dadurch gekennzeichnet, dass** der leitende Träger (6a; 106a; 206a) der Kathode (6) ein poröses Blatt ist, das eine poröse wasserabweisende Lage umfaßt, zum Beispiel aus zusammengebackenen feinen Polytetrafluorethylenkörnern, auf die eine poröse leitende Lage aus gesintertem Metall oder feinpulverigem Kohlenstoff gegebenenfalls mit einem Verbindungsmittel aufgeklebt ist, und gegebenenfalls, einen Katalysator enthält, um den Sauerstoff elektrochemisch zu reduzieren, wobei die wasserabweisende Lage gegenüber einer dünnen Luftschicht angeordnet ist und die leitende Lage als Grenze zwischen dem diaphragmaseitigen Elektrolyten und der Luft dient.

11. Elektrochemischer Stromerzeuger nach einem der Ansprüche 1 bis 10, **dadurch gekennzeichnet, dass** das Diaphragma (5; 105; 205) aus einem Blatt oder mehreren mit mikroporösem, mit Elektrolyt imprägnierten Isoliermaterial zusammengeklebten Blättern besteht.

12. Elektrochemischer Stromerzeuger nach einem der Ansprüche 1 bis 11, **dadurch gekennzeichnet, dass** die Dicke "e" der Lücke für den Durchgang der anodischen Paste (4; 104; 204) in der Größenordnung von 0,5 bis 10 mm liegt.

13. Elektrochemischer Stromerzeuger nach einem der Ansprüche 1 bis 12, **dadurch gekennzeichnet, dass** der anodische Kollektorträger (3; 103; 203), das Diaphragma (5; 105; 205), der kathodische Kollektorträger (6a; 106a; 206a) in Form von rechtwinkligen Platten vorliegen, wobei die Lücke zum Durchgang der anodischen Paste (4; 104; 204) eine Geometrie hat, die jener einer rechtwinkeligen Platte entspricht.

14. Elektrochemischer Stromerzeuger nach Anspruch 13, **dadurch gekennzeichnet, dass** eine rechtwinkelige Platte eine Länge "L" von 5 bis 10 cm und eine Breite "I" von 1 bis 50 cm hat, wobei das Verhältnis Breite "I" / Dicke der Lücke "e" im wesentlichen wenigstens gleich 20 ist.

15. Elektrochemischer Stromerzeuger nach einem der Ansprüche 1 bis 14, **dadurch gekennzeichnet, dass** die Vorrichtung (10; 210) zur Einführung der Paste (4; 204) aus einem Reservoir (16) zum Speichern der nicht-oxidierten und von einer Leitung (11; 211) kommenden Paste zum Verteilen dieser Paste (4; 204) in eine einzige Lücke ausgelegt ist.

16. Elektrochemischer Stromerzeuger nach Anspruch 15, **dadurch gekennzeichnet, dass** die Vorrichtung (10; 210) zur Einführung der Paste (4; 204) in eine Lücke aus einem mechanischen Teil analog einer Breitschlitzdüse mit einem Fischschwanz- oder Kleiderhakenprofil besteht, das unmittelbar vor dem Eingang in diese Lücke angeordnet ist und in der Lage ist, an seinem Ausgang das Band der Paste (4; 204) bei homogenem Fließen zu bilden.

17. Elektrochemischer Stromerzeuger nach einem der Ansprüche 1 bis 16, **dadurch gekennzeichnet, dass** die Vorrichtung (110-110a) zur Einführung der Paste (104) aus einem Speicherreservoir nicht-oxidierter Paste und die durch eine Leitung (111) ankommt, ausgelegt ist, um diese Paste (104) auf mehrere untereinander parallele Lücken zu verteilen.

18. Elektrochemischer Stromerzeuger nach Anspruch 17, **dadurch gekennzeichnet, dass** die Vorrichtung (110-110a) zur Einführung der Paste (104) in mehrere untereinander parallele Lücken aus einem Profilteil (110) analog einer Breitschlitzdüse besteht, deren beide sich gegenüber stehende Hauptflächen in Verlängerung von zwei äußeren die beiden äußeren Lücken begrenzenden Wänden gelegen sind, wobei eine interne Vorrichtung (110a) zum Leiten der Paste (104) im übrigen dazu vorgesehen ist, dass jene in jede Lücke eindringt, indem sie über geneigte Wände, die sich zum Äußeren dieser Lücke erweitern, geleitet werden.

19. Elektrochemischer Stromerzeuger nach einem der Ansprüche 15 bis 18, **dadurch gekennzeichnet, dass** eine Vorrichtung (14; 214) analog der Vorrichtung (10; 210) zur Einführung der Paste in eine oder mehrere Lücken symmetrisch am Ausgang angeordnet ist.

20. Elektrochemischer Stromerzeuger nach einem der Ansprüche 1 bis 19, **dadurch gekennzeichnet, dass** er mehrere in Reihe angebrachte Zellen (2) umfaßt.

21. Elektrochemischer Stromerzeuger nach Anspruch 20, **dadurch gekennzeichnet, dass** in einem Gehäuse (8) aufeinanderfolgend angeordnet sind:
- ein anodischer Kollektor (3);
- ein Abschnitt zirkulierender anodischer Paste (4);
- ein Diaphragma (5);
- ein Kollektor (6a) für die Luftkathode (6);
- ein leitendes, perforiertes Beabstandungsmittel (6c), das in einer Luftlage (6b) angeordnet ist und gleichermaßen als kathodischer Kollektor dient.
- erneut einen anodischen Kollektor (3), der in Kontakt mit dem Beabstandungsmittel (6c), fortgesetzt durch die Folge der obigen Elemente so oft, wie es Zellen (2) gibt und beendet durch einen Kollektor (7), der mit dem +Pol des elektrochemischen Stromerzeugers (1) verbunden ist, wobei der erste Kollektor für die Anode (3) mit dem -Pol des elektrochemischen Stromerzeugers (1) verbunden ist;
wobei das Gehäuse (8) Öffnungen (9) umfaßt, um die Luftschichten (6b) mit der Umgebung in Verbindung zu setzen.

22. Elektrochemischer Stromerzeuger nach einem der Ansprüche 1 bis 19, **dadurch gekennzeichnet, dass** in dem Gehäuse (108) aufeinanderfolgend angeordnet sind:
- ein anodischer Kollektor (103);
- ein Abschnitt aus anodischer Paste (104);
- ein Diaphragma (105);
- ein poröser leitender Träger (106a) als kathodischer Kollektor;
- ein leitendes perforiertes Beabstandungsmittel (106c) gleichermaßen als kathodischer Kollektor und angeordnet in einer Luftschicht (106b);
- ein poröser leitender Träger (106a) als kathodischer Kollektor;
- ein Diaphragma (105);
- ein Abschnitt aus anodischer Paste (104);
- ein anodischer Kollektor (103),
und so fortgesetzt bis zu einem anodischen Pastenabschnitt (104) und einem anodischen Kollektor (103), wobei alle anodischen Kollektoren (103) mit dem -Pol des elektrochemischen Stromerzeugers (101) verbunden sind und alle kathodischen Kollektoren (106a-106c) mit dem +Pol des Generators verbunden sind, wobei das Gehäuse (108) Öffnungen umfaßt, um die Luftschichten mit der äußeren Umgebung in Verbindung zu setzen.

23. Elektrochemischer Stromerzeuger nach einem der Ansprüche 1 bis 17, **dadurch gekennzeichnet, dass** er eine einzige Zelle umfaßt, dass die Kathode, das Diaphragma und der anodische Kollektor in gleiche Teile aufgeteilt und parallel in dem Gehäuse (208) in folgender Reihenfolge angeordnet sind:
- anodischer Kollektor (203);
- Abschnitt aus anodischer Paste (204);
- Diaphragma (205);
- kathodischer poröser Kollektor (206a);
- Luftschicht (206b), die ein isolierendes Beabstandungsmittel (206d) enthalten kann;
- anodischer Kollektor (203),
und so fort bis zu einem Kathodenabschnitt (206a-206b-206c-207), wobei die Paste (204) vom Eingang zum Ausgang gemäß einem einzigen Haarnadelweg zirkuliert und das Gehäuse (208) Öffnungen umfaßt, um die Luftschichten (206b) mit der äußeren Umgebung in Verbindung zu setzen, und die Paste (204) im übrigen in der einen oder der anderen Richtung zirkulieren kann.

24. Elektrochemischer Stromerzeuger nach einem der Ansprüche 1 bis 23, **dadurch gekennzeichnet, dass** er Mittel zur Sicherstellung der Bewegung der Paste (4; 104; 204) vom Typ Pumpe, Vorrichtung mit Gasdruck oder Kolben umfaßt, wobei diese Mittel zur Bewegung außerhalb der Lücke oder der Lücken zum Durchgang der Paste (4; 104; 204) liegen und insbesondere in der Lage sind, die Paste (4; 104; 204) bei einer mittleren Lineargeschwindigkeit in der Lücke von 0,1 bis 50 mm/Minute zu bewegen.

25. Elektrochemischer Stromerzeuger nach einem der Ansprüche 1 bis 24, **dadurch gekennzeichnet, dass** er eine mechanische oder hydraulische Wiederaufladung hat oder auch dass er elektrisch wiederaufladbar ist.

## Claims

1. Electrochemical generator designed to produce electricity by oxidation of a metal and reduction of a gas containing oxygen, said generator (1; 101; 201) comprising at least one electrochemical cell (2) constituted by:
- a cathode (6) comprising a porous conductive support (6a; 106a; 206a) supplied with oxygen or a gas containing oxygen (6b; 106b; 206b) and enabling this oxygen to be reduced, said porous conductive support (6a; 106a; 206a) serving as cathodic collector;
- a diaphragm (5; 105; 205) in electrolytic contact with said porous conductive support (6a; 106a; 206a);
- a conductive support serving as anodic collector (3; 103; 203), the anode being constituted by said metal in the powdered state placed in the form of an anodic paste (4; 104; 204), being combined with an electrolyte;
said anodic paste (4; 104; 204) being capable of being displaced while being in contact firstly with said diaphragm (5; 105; 205) and secondly with said anodic collector (3; 103; 203) and, during its displacement, being progressively transformed at least partly into an oxidised metal paste and the oxygen being reduced so as to produce electrical energy, the electrodes being connected by an external circuit, **characterised in that** the porous conductive support (3; 103; 203) serving as anodic collector, the diaphragm (5; 105; 205) and the conductive support (6a; 106a; 206a) serving as cathodic collector are elements substantially of the same shape and mounted parallel with one another, said diaphragm (5; 105; 205) and said anodic collector support (3; 103; 203) being mutually spaced to constitute a cavity in which the anodic paste (4; 104; 204) is induced to move in a ribbon, the device (10; 110-110a; 210) for feeding the anodic paste (4; 104; 204) into said cavity being shaped so that in flowing conditions the paste fits the section of the cavity at every point without any break.

2. Electrochemical generator according to claim 1,
**characterised in that** the device (10; 110-110a; 210) for feeding the anodic paste is shaped so that in steady conditions the paste progresses in the cavity following isobaric or substantially isobaric surfaces.

3. Electrochemical generator according to one of claims 1 and 2, **characterised in that** the anodic metal powder is selected from the powders of zinc, aluminium, iron, cadmium, lithium, magnesium or lead, being in particular zinc powder.

4. Electrochemical generator according to one of claims 1 to 3, **characterised in that** the anodic metal powder has a granulometric section of between 10⁻² µm and 100 µm.

5. Electrochemical generator according to one of claims 1 to 4, **characterised in that** the electrolyte is an aqueous solution of sodium hydroxide or potassium hydroxide with a concentration of between 1 and 13 moles/litre.

6. Electrochemical generator according to one of claims 1 to 5, **characterised in that** through the incorporation of a gelling agent the paste is set to a viscosity greater than 1 Pa.s, in particular between 1 Pa.s and 500 Pa.s.

7. Electrochemical generator according to one of claims 1 to 6, **characterised in that** the anodic paste (14; 104; 204) includes a fraction of at least one additive designed to improve the electrical and/or rheological characteristics of the paste, and selected in particular from:
- agents improving the electrical conductivity of the paste, such as powdered graphite;
- agents with a low coefficient of friction designed to reduce the energy lost by friction in the paste, such as powdered graphite, fluorinated polymers such as powdered polytetrafluorethylene;
- agents promoting the dispersion of the anodic metal powder in the paste, such as zinc oxide which promotes the dispersion of the zinc powder by ionic equilibrium;
- agents promoting the electrochemical reaction, such as cellulose regulating the level of water in the liquid phase.

8. Electrochemical generator according to one of claims 1 to 7, **characterised in that** the paste has the following formulation per 100 parts by weight of metal powder:
• 16 to 50 parts by weight of de-ionised water;
• 13 to 44 parts by weight of KOH or NaOH;
• 0.5 to 6 parts by weight of a gelling agent such as carboxymethyl cellulose and polyacrylates;
• up to 20 parts by weight, in particular 6.5 to 20 parts by weight, of at least one additive as defined in claim 7.

9. Electrochemical generator according to one of claims 1 to 8, **characterised in that** the chemically inert anodic collector (3; 103; 203) is made of metal, graphite or a plastic material made conductive by the incorporation of a conductive filler.

10. Electrochemical generator according to one of claims 1 to 8, **characterised in that** the conductive support (6a; 106a; 206a) of the cathode (6) is a porous sheet comprising a water-repellent porous layer, for example made of fine grains of sintered polytetrafluorethylene, to which is joined a porous conductive layer, made of sintered metal or powdered carbon, possibly mixed with a binder and containing, when appropriate, a catalyst for electrochemically reducing the oxygen, the water-repellent layer being disposed facing an air gap, the conductive layer serving as frontier between the electrolyte on the diaphragm side and the air.

11. Electrochemical generator according to one of claims 1 to 10, **characterised in that** the diaphragm (5; 105; 205) is composed of a sheet or of a plurality of joined sheets of microporous insulating material impregnated with electrolyte.

12. Electrochemical generator according to one of claims 1 to 11, **characterised in that** the thickness "e" of the cavity for passage of the anodic paste (4; 104; 204) is of the order of 0.5 to 10 mm.

13. Electrochemical generator according to one of claims 1 to 12, **characterised in that** the anodic collector support (3; 103; 203), the diaphragm (5; 105; 205), the cathodic collector support (6a; 106a; 206a) are in the form of rectangular plates, the cavity for passage of the anodic paste (4; 104; 204) having a geometry corresponding to that of a rectangular plate.

14. Electrochemical generator according to claim 13, **characterised in that** a rectangular plate has a length "L" of 5 to 10 cm and a width "l" of 1 to 50 cm, the ratio of the width "l" to the thickness "e" of the cavity being essentially at least equal to 20.

15. Electrochemical generator according to one of claims 1 to 14, **characterised in that** the device (10; 210) for introduction of the paste (4; 204) coming from a reservoir (16) for storage of non-oxidised paste and arriving through a pipe (11; 211) is arranged to distribute said paste (4; 204) to a single cavity.

16. Electrochemical generator according to claim 15,
**characterised in that** the device (10; 210) for introduction of the paste (4; 204) into a cavity consists of a mechanical part similar to a flat die, with a fish tail or sloping shouldered profile, disposed immediately in front of the inlet of said cavity, and capable of forming at its outlet the ribbon of paste (4; 204) with a a homogeneous flow.

17. Electrochemical generator according to one of claims 1 to 16, **characterised in that** the device (110-110a) for introduction of the paste (104) coming from a reservoir for storage of non-oxidised paste and arriving through a pipe (111) is arranged to distribute said paste (104) to a plurality of cavities arranged parallel with one another.

18. Electrochemical generator according to claim 17, **characterised in that** the device (110-110a) for introduction of the paste (104) into a plurality of cavities arranged parallel with one another consists of a profiled part (110) similar to a flat die whose two main opposing faces are situated in the extension of the two extreme walls delimiting the two extreme cavities, an internal device (110a) for guidance of the paste (104) also being provided so that the paste penetrates into each cavity while being guided over inclined walls opening out towards the outside of said cavities.

19. Electrochemical generator according to one of claims 15 to 18, **characterised in that** a device (14; 214) similar to the device (10; 210) for introduction of the paste into one or more cavities is disposed symmetrically at the outlet.

20. Electrochemical generator according to one of claims 1 to 19, **characterised in that** it comprises a plurality of cells (2) assembled in series.

21. Electrochemical generator according to claim 20, **characterised in that** the following are disposed successively in a housing (8):
- an anodic collector (3);
- a length of circulating anodic paste (4);
- a diaphragm (5);
- a collector (6a) for the air cathode (6);
- a perforated conductive spacer (6c) disposed in an air gap (6b) and also serving as cathodic collector;
- another anodic collector (3) which is in contact with the spacer (6c), followed by the succession of the preceding elements as many times as there are cells (2) and ending with a collector (7) connected to the + terminal of the electrochemical generator (1), the first collector for the anode (3) being connected to the - terminal of the electrical generator (1);
the housing (8) comprising openings (9) to enable the air gaps (6b) to communicate with the exterior.

22. Electrochemical generator according to one of claims 1 to 19, **characterised in that** the following are disposed successively in a housing (108):
- an anodic collector (103);
- a length of anodic paste (104);
- a diaphragm (105);
- a porous conductive support (106a) serving as cathodic collector;
- a conductive perforated spacer (106c) also serving as cathodic collector, disposed in an air gap (106b);
- a porous conductive support (106a) serving as cathodic collector;
- a diaphragm (105);
- a length of anodic paste (104);
- an anodic collector (103);
and so on up to a length of anodic paste (104) and an anodic collector (103), all the anodic collectors (103) being connected to the - terminal of the electrochemical generator (101) and all the cathodic collectors (106a-106c) being connected to the + terminal of said generator, the housing (108) comprising openings to enable to the air gaps to communicate with the exterior.

23. Electrochemical generator according to one of claims 1 to 17, **characterised in that** it comprises a single cell, **in that** the cathode, the diaphragm and the anodic collector are divided into equal parts, disposed parallel in a housing (208) in the following order:
- anodic collector (203);
- length of anodic paste (204);
- diaphragm (205);
- cathodic porous collector (206a);
- air gap (206b) which may contain an insulating spacer (206d);
- anodic collector (203);
and so on as far as a length of cathode (206a-206b-206c-207), the paste (204) circulating from the inlet to the outlet along a single hairpin path, the housing (208) comprising openings to enable the air gaps (206b) to communicate with the exterior, the paste (204) also being able to circulate in one direction or in the other.

24. Electrochemical generator according to one of claims 1 to 23, **characterised in that** it comprises means ensuring the displacement of the paste (4; 104; 204) of pump, gas pressure device or piston type, these displacement means being outside the cavity or cavities for passage of the paste (4; 104; 204) and being in particular capable of displacing the paste (4; 104; 204) at an average linear speed of 0.1 to 50 mm/minute in the cavity.

25. Electrochemical generator according to one of claims 1 to 24, **characterised in that** it can be recharged mechanically or hydraulically, or that it is rechargeable electrically.
